# EUROPEAN PATENT APPLICATION

(11) **EP 4 492 129 A1**
(43) Date of publication of application: **15.01.2025**
(21) Application number: 23766837.1
(22) Date of filing: 07.03.2023
(51) Int. Cl.: G02C 7/06, G02B 3/14, G02B 7/04, G02B 7/06, G02B 7/08, G02C 11/00

(54) **LENS CONTROL DEVICE, OCULAR LENS DEVICE, EYEGLASSES, AND CONTROL METHOD**

(30) Priority: 07.03.2022 JP 2022034552; 07.03.2022 JP 2022034578
(71) Applicant: Vixion Inc., Tokyo 103-0012 (JP)
(72) Inventor: TAKIZAWA Shigeru, Tokyo 103-0012 (JP); UCHIUMI Toshiharu, Tokyo 103-0012 (JP)
(74) Representative: SSM Sandmair
(86) International application number: PCT/JP2023/008541
(87) International publication number: WO 2023/171661

(57) **Abstract**

A focal length of a variable focus lens is adjusted with high precision to match a focus of each individual user according to a distance to a view object.

A lens control apparatus, which controls a focal length of a variable focus lens for eyes, includes a storage portion for storing focal-length-specifying-information for specifying a focal length of the variable focus lens according to a distance to a view object, a control portion for controlling a focal length of the variable focus lens based on a detection result of a distance detection portion that detects the distance to the view object and the focal-length-specifying-information in the storage portion, and a setting process portion for executing a setting process in which a distance to each of setting-use view objects located at multiple different distances when the user of the variable focus lens views the respective setting-use view objects, and the focal-length-specifying-information generated based on each focal length of the variable focus lens at which the user focuses on each of the setting-use view objects, are stored in the storage portion.

## Description

### TECHNICAL FIELD

The present invention relates to lens control apparatus having a variable focus lens for eyes, ophthalmic lens apparatus, spectacles, and control method.

### BACKGROUND ART

Patent Literature 1 discloses spectacles in which a nosepiece (spectacle frame) holds two variable focus lenses which are used for each eye when viewing a view object with both eyes of a user. In the spectacles, a wheel (operation portion) is provided on each armpiece which is hung on each ear of the user. When the user turns the right wheel, a focal length of the variable focus lens for the right eye changes, and when the user turns the left wheel, a focal length of the variable focus lens for the left eye changes.

### CITATION LIST

### PATENT LITERATURE

Patent Literature 1: Japanese Unexamined Patent Application Publication (Translation of PCT Application) No. 2009-543148.

### SUMMARY OF INVENTION

### TECHNICAL PROBLEM

However, conventionally, when the user wants to adjust the focal length of the variable focus lens during use, the user must operate the operation portion each time, which is troublesome for the user.

### SOLUTION TO PROBLEM

A first aspect of the present invention is a lens control apparatus for controlling a focal length of a variable focus lens for eyes, it includes a storage portion for storing focal-length-specifying-information for specifying a focal length of the variable focus lens according to a distance to a view object, a control portion for controlling a focal length of the variable focus lens based on a detection result of a distance detection portion that detects the distance to the view object and the focal-length-specifying-information in the storage portion, and a setting process portion for executing a setting process in which a distance to each of setting-use view objects located at multiple different distances when the user of the variable focus lens views the respective setting-use view objects, and the focal-length-specifying-information generated based on each focal length of the variable focus lens at which the user focuses on each of the setting-use view objects, are stored in the storage portion.

In the present lens control apparatus, the focal-length-specifying-information for specifying a focal length (suitable focal length) of the variable focus lens suitable for the user according to the distance to the view object is stored in the storage portion. Then, when the user uses the apparatus, the distance to the view object that the user views through the variable focus lens is detected by the distance detection portion, and the focal length of the variable focus lens is automatically controlled to be the suitable focal length for the user based on the detection result and the focal-length-specifying-information in the storage portion. As a result, even if the view distance to the view object changes during the user's use, the focal length of the variable focus lens is automatically changed so that the view object is in focus, and the view object is brought into focus.

Here, the inventors have found through research that an outline of graph showing a relationship between the distance to the view object and the suitable focal length is roughly the same for both users who do not need to correct their refractive errors with spectacles or the like and users who have sufficient visual acuity to correct their refractive errors with spectacles or the like. That is, the inventors have found that although the suitable focal length (focal-length-specifying-information) for viewing the view object at a predetermined distance differs for each user depending on the user's refractive error and visual acuity, an outline of change (focal-length-specifying-information) in the suitable focal length according to the distance is less different for each user. Therefore, even if information on the outline of change in the suitable focal length according to the distance among the focal-length-specifying-information is predetermined fixed information (information used by all users), it is possible to adjust the focal length of the variable focus lens to match the focus of each user according to the distance to the view object.

However, in order to perform this adjustment with higher accuracy, it is necessary to use the focal-length-specifying-information, which is information on the outline of change in the suitable focal length according to the distance, that is adapted to each user.

In the present lens control apparatus, the setting process portion executes the setting process in which the focal-length-specifying-information suitable for each user is stored in the storage portion. In detail, the focal-length-specifying-information stored in the storage portion in this setting process is generated based on the distance to each of the setting-use view objects located at multiple different distances when the user of the variable focus lens views the respective setting-use view objects, and each focal length of the variable focus lens at which the user focuses on each of the setting-use view objects. As a result, the focal-length-specifying-information suitable for each user is generated, including the outline of change in the suitable focal length according to the distance, so that the focal length of the variable focus lens can be adjusted with high precision to match the focus of each user according to the distance to the view object.

As a second aspect, in the first aspect, the setting process portion may use the detection result of the distance detection portion as distance information to each of the setting-use view objects, and may execute the setting process.

When the distance to each of the setting-use view objects is known in advance, such as when each of the setting-use view objects is located at a predetermined distance, the setting process can be executed by inputting this distance. However, when the distance to each of the setting-use view objects is not known in advance, it is necessary to know the distance to each of the setting-use view objects in another way.

In the present lens control apparatus, the distance to each of the setting-use view objects is grasped by using the detection result of the distance detection portion which is used for automatic control of the focal length of the variable focus lens during user's use, and the setting process is executed. Therefore, even if the distance to each of the setting-use view objects is not grasped in advance, the distance to each of the setting-use view objects can be easily obtained and the setting process can be executed.

A third aspect of the present invention is a lens control apparatus for controlling a focal length of a variable focus lens for eyes, it includes a storage portion for storing focal-length-specifying-information for specifying a focal length of the variable focus lens according to a distance to a view object, a control portion for controlling a focal length of the variable focus lens based on a detection result of a distance detection portion that detects the distance to the view object and the focal-length-specifying-information in the storage portion, and an update process portion for executing an update process in which a distance to a setting-use view object when the user of the variable focus lens views the setting-use view object, and a focal length of the variable focus lens at which the user focuses on the setting-use view object are acquired, and the focal-length-specifying-information stored in the storage portion is updated by new focal-length-specifying-information in which not only the focal length corresponding to the view distance but also focal lengths corresponding to other distances are corrected by a correction value that reduces a difference between the acquired focal length and the focal length corresponding to the view distance in the focal-length-specifying-information stored in the storage portion.

In the present lens control apparatus, the focal-length-specifying-information for specifying a focal length (suitable focal length) of the variable focus lens suitable for the user according to the distance (view distance) to the view object is stored in the storage portion. Then, when the user uses the apparatus, the distance to the view object that the user views through the variable focus lens is detected by the distance detection portion, and the focal length of the variable focus lens is automatically controlled to be the suitable focal length for the user based on the detection result and the focal-length-specifying-information in the storage portion. As a result, even if the view distance to the view object changes during the user's use, the focal length of the variable focus lens is automatically changed so that the view object is in focus, and the view object is brought into focus.

Here, the focal-length-specifying-information stored in the storage portion must be adapted to each individual user. Therefore, it would be necessary for each user to determine the suitable focal length of the user at each view distance while changing the distance (view distance) to the view object, and to specify a relationship between the view distance and the suitable focal length over a predetermined distance range. However, such a work involves determining the suitable focal length of the user for each of many view distances, which is very troublesome for the user.

The inventors have found through research that an outline of graph showing a relationship between the distance (view distance) to the view object and the suitable focal length is roughly the same for both users who do not need to correct their refractive errors with spectacles or the like and users who have sufficient visual acuity to correct their refractive errors with spectacles or the like. That is, the inventors have found that although the suitable focal length corresponding to each view distance differs for each user depending on the user's refractive error and visual acuity, an outline of change (focal-length-specifying-information) in the suitable focal length according to the view distance over the predetermined distance range is less different for each user. Therefore, if the suitable focal length for the user corresponding to at least one view distance is determined, it is possible to obtain the focal-length-specifying-information suitable for each individual user by using the outline of change common to the users.

Based on this opinion, the lens control apparatus updates the focal-length-specifying-information stored in the storage portion to be suitable for each user as follows. That is, in the update process portion, first, the distance (view distance) to the setting-use view object and the suitable focal length for the user are obtained, and the correction value (including a correction value that makes a difference mentioned later zero) that reduces the difference between the obtained focal length and the focal length corresponding to the view distance in the focal-length-specifying-information stored in the storage portion is obtained. Then, new focal-length-specifying-information is obtained in which not only the focal length corresponding to the view distance but also focal lengths corresponding to other view distances are corrected by the correction value. This new focal-length-specifying-information can be such that, relative to the focal-length-specifying-information stored in the storage portion, the outline of change in the suitable focal length according to the view distance within the predetermined distance range including the view distance and the other view distances is approximately the same, but each focal length corresponding to each view distance within the predetermined distance range is shifted by the correction value. According to this, by performing the relatively simple work of determining the user's suitable focal length corresponding to a very small number of view distances, such as one or a few points, the focal-length-specifying-information in the storage portion can be updated to the new focal-length-specifying-information that is suitable for the user.

Therefore, according to the present lens control apparatus, the focal-length-specifying-information suited to each individual user can be obtained without forcing the user to perform complicated works, and the focal length of the variable focus lens can be adjusted with high precision to match the focus of each user according to the distance to the view object.

As a fourth aspect, in the third aspect, the new focal-length-specifying-information may be obtained by uniformly correcting the focal length corresponding to the view distance and the focal length corresponding to the above other distance by the same correction value.

In the present lens control apparatus, the new focal-length-specifying-information obtained can be such that, relative to the focal-length-specifying-information stored in the storage portion, the outline of change in the suitable focal length according to the view distance within the predetermined distance range including the view distance and the other view distances is the same, and each focal length corresponding to each view distance within the predetermined distance range is shifted by the same correction value.

As a fifth aspect, in either the third or fourth aspect, the update process portion may use the detection result of the distance detection portion as distance information to the setting-use view object, and execute the update process.

When the distance to the setting-use view object is known in advance, such as when the setting-use view object is located at a predetermined distance, the update process can be executed by inputting the distance. However, when the distance to the setting-use view object is not known in advance, it is necessary to know the distance to the setting-use view object in another way.

In the present lens control apparatus, the distance to each of the setting-use view objects is grasped by using the detection result of the distance detection portion which is used for automatic control of the focal length of the variable focus lens during user's use, and the update process is executed. Therefore, even if the distance to each of the setting-use view objects is not grasped in advance, the distance to each of the setting-use view objects can be easily obtained and the setting process can be executed. Therefore, even if the distance to the setting-use view object is not grasped in advance, the distance to the setting-use view object can be easily obtained and the update process can be executed.

As a sixth aspect, in any one of the third to fifth aspects, the above other distance may be any distance included in the focal-length-specifying-information stored in the storage portion, other than the view distance.

In the present lens control apparatus, the new focal-length-specifying-information can be obtained in which each focal length corresponding to each view distance is shifted by the correction value over the entire distance range included in the focal-length-specifying-information. As a result, the focal-length-specifying-information in the storage portion can be updated to new focal-length-specifying-information in which focal lengths over the entire distance range are suited to the user, simply by performing the simple work of determining the user's suitable focal length that corresponds to at least one view distance.

As a seventh aspect, in any of the third to sixth aspects, the update process portion may acquire a distance to the setting-use view object located within a distance range in which a rate of change of focal length with respect to distance is equal to or less than a predetermined threshold, and execute the update process.

In a distance range where the rate of change of the suitable focal length with respect to the view distance is relatively large (for example, a range where the view distance is short), the difference in the suitable focal length caused by an error in the view distance of the setting-use view object is large. In this case, an error in the correction value becomes large, making it difficult to obtain the new focal-length-specifying-information suitable for the user.

In the present lens control apparatus, the correction value is obtained based on the suitable focal length for the distance to the setting-use view object located within a distance range in which the rate of change of the focal length with respect to the distance is equal to or less than the predetermined threshold. Therefore, the correction value with a small error can be obtained, and it is easy to obtain the new focal-length-specifying-information suitable for the user.

An eighth aspect of the present invention is an ophthalmic lens apparatus having a variable focus lens for eyes, and a lens control device for controlling the variable focus lens, it includes a distance detection portion for detecting a distance to the view object, and the lens control apparatus according to any one of the first to seventh aspects is used as the control device.

Examples of the present ophthalmic lens apparatus include articles worn and used by a user such as spectacles, contact lenses. By using the present ophthalmic lens apparatus as the articles worn and used by a user in this manner, the focal length of the variable focus lens is automatically controlled during the user's daily life wearing and using the article (for example, during watching television, playing a game console, using a computer or tablet, reading a book, etc.). As a result, when the user views view objects located at various distances in the daily life, the user can view any of the view objects in focus.

As a ninth aspect, in the eighth aspect, the lens control device may be the lens control apparatus according to the first or second aspect, and it may include a focal-length determination portion for determining each focal length of the variable focus lens at which the user of the variable focus lens views and focuses on each of the setting-use view objects, and the setting process portion may use a result of determination by the focal-length determination portion, and execute the setting process.

When each focal length (suitable focal length) of the variable focus lens at which the user focuses on each setting-use view object is known in advance, the setting process can be executed by inputting these suitable focal lengths. However, when these suitable focal lengths are not known in advance, it is necessary to know these suitable focal lengths in another way.

The present ophthalmic lens apparatus includes the focal-length determination portion for determining each focal length (suitable focal length) of the variable focus lens at which the user of the variable focus lens views and focuses on each of the setting-use view objects. Then, using the result of determination by the focal-length determination portion, the user's suitable focal lengths for each of the setting-use view objects are grasped, and the setting process is executed. Therefore, even if these suitable focal lengths are not grasped in advance, the setting process can be executed.

As a tenth aspect, in the eighth aspect, the lens control device may be the lens control apparatus according to any of the third to seventh aspect, and it may include a focal-length determination portion for determining a focal length of the variable focus lens at which the user of the variable focus lens views and focuses on the setting-use view objects, and the update process portion may use a result of determination by the focal-length determination portion, and execute the update process.

When the focal length (suitable focal length) of the variable focus lens at which the user focuses on the setting-use view object is known in advance, the update process can be executed by inputting these suitable focal lengths. However, when these suitable focal lengths are not known in advance, it is necessary to know these suitable focal lengths in another way.

The present ophthalmic lens apparatus includes the focal-length determination portion for determining the focal length (suitable focal length) of the variable focus lens at which the user of the variable focus lens views and focuses on the setting-use view objects. Then, using the result of determination by the focal-length determination portion, the user's suitable focal length for the setting-use view object is grasped, and the update process is executed. Therefore, even if these suitable focal lengths are not grasped in advance, the update process can be executed.

As an eleventh aspect, in the ninth or tenth aspect, it may include an operation portion for receiving a user operation for changing a focal length of the variable focus lens, and the focal-length determination portion may determine the focal length based on an operation result of the operation portion.

According to the present ophthalmic lens apparatus, the focal-length determination portion can easily grasp the user's suitable focal length for the setting-use view object based on the operation result of the operation portion that accepts the user operation for changing the focal length of the variable focus lens.

A twelfth aspect of the present invention is spectacles including the above-mentioned ophthalmic lens apparatus, and the variable focus lens is held in a spectacle frame.

If the ophthalmic lens apparatus is used as spectacles, as described above, the user can adjust the focal length of the variable focus lens to suit the user by automatically controlling the focal length while wearing and using the spectacles in daily life.

A thirteenth aspect of the present invention is a control method for controlling a focal length of a variable focus lens for eyes, it includes a control step for controlling a focal length of the variable focus lens based on a detection result of a distance detection portion that detects a distance to a view object and focal-length-specifying-information stored in a storage portion that stores the focal-length-specifying-information for specifying a focal length of the variable focus lens according to the distance to the view object, and a setting process step for executing a setting process in which a distance to each of setting-use view objects located at multiple different distances when the user of the variable focus lens views the respective setting-use view objects, and the focal-length-specifying-information generated based on each focal length of the variable focus lens at which the user focuses on each of the setting-use view objects, are stored in the storage portion.

According to the present control method, as in the case of the lens control apparatus described above, the focal length of the variable focus lens can be adjusted with high precision to match the focus of each individual user according to the distance to the view object.

A fourteenth aspect of the present invention is a control method for controlling a focal length of a variable focus lens for eyes, it includes a control step for controlling a focal length of the variable focus lens based on a detection result of a distance detection portion that detects a distance to a view object and focal-length-specifying-information stored in a storage portion that stores the focal-length-specifying-information for specifying a focal length of the variable focus lens according to the distance to the view object, and an update process step for executing an update process in which a distance to a setting-use view object when the user of the variable focus lens views the setting-use view object, and a focal length of the variable focus lens at which the user focuses on the setting-use view object are acquired, and the focal-length-specifying-information stored in the storage portion is updated by new focal-length-specifying-information in which not only the focal length corresponding to the view distance but also focal lengths corresponding to other distances are corrected by a correction value that reduces a difference between the acquired focal length and the focal length corresponding to the view distance in the focal-length-specifying-information stored in the storage portion.

According to the present control method, as in the case of the lens control apparatus described above, the focal length of the variable focus lens can be adjusted with high precision to match the focus of each individual user according to the distance to the view object, without forcing the user to perform complicated works.

### ADVANTAGEOUS EFFECTS OF INVENTION

According to the present invention, the focal length of the variable focus lens can be adjusted with high precision to match the focus of each individual user in accordance with the distance to the view object.

### BRIEF DESCRIPTION OF DRAWINGS

[FIG. 1] FIG. 1 is a front view schematically showing a configuration of spectacles according to an embodiment 1.
[FIG. 2] FIG. 2 is a plan view schematically showing a configuration of the spectacles.
[FIG. 3] FIG. 3 is a cross-sectional view schematically showing a configuration of a variable focus lens in the spectacles.
[FIG. 4] FIG. 4 is a plan view schematically showing a configuration of the variable focus lens in the spectacles.
[FIG. 5] FIG. 5 is a block diagram showing a configuration of a control apparatus in the spectacles.
[FIG. 6] FIG. 6 is an explanatory diagram showing an example of table data that is focal-length-specifying-information stored in a storage portion of the control apparatus.
[FIG. 7] FIG. 7 is a flowchart showing an example of a setting mode of focal length control in the embodiment 1.
[FIG. 8] FIG. 8 is a flowchart showing an example of a use mode of focal length control in the embodiment 1.
[FIG. 9] FIG. 9 is a graph for explaining an approximation formula calculated from the table data.
[FIG. 10A] FIG. 10A is an explanatory diagram showing an example of data stored in a temporary memory.
[FIG. 10B] FIG. 10B is an explanatory diagram showing an example of table data that is focal-length-specifying-information updated by the data stored in the temporary memory.
[FIG. 10C] FIG. 10C is a graph for explaining an approximation formula calculated from the table data.
[FIG. 11] FIG. 11 is a front view schematically showing another configuration of spectacles according to the embodiment 1.
[FIG. 12] FIG. 12 is an explanatory diagram showing an example of table data that is focal-length-specifying-information stored in a storage portion of a control apparatus in spectacles according to an embodiment 2.
[FIG. 13] FIG. 13 is a flowchart showing an example of a setting mode of focal length control in the embodiment 2.

### DESCRIPTION OF EMBODIMENTS

### [Embodiment 1]

Hereinafter, an embodiment (hereinafter, the present embodiment will be referred to as "embodiment 1") in which the present invention is applied to spectacles as an ophthalmic lens apparatus equipped with a lens control apparatus will be described.

The ophthalmic lens apparatus to which the present invention can be applied is not limited to spectacles, but may be other articles worn and used by a wearer (hereinafter referred to as a "user").

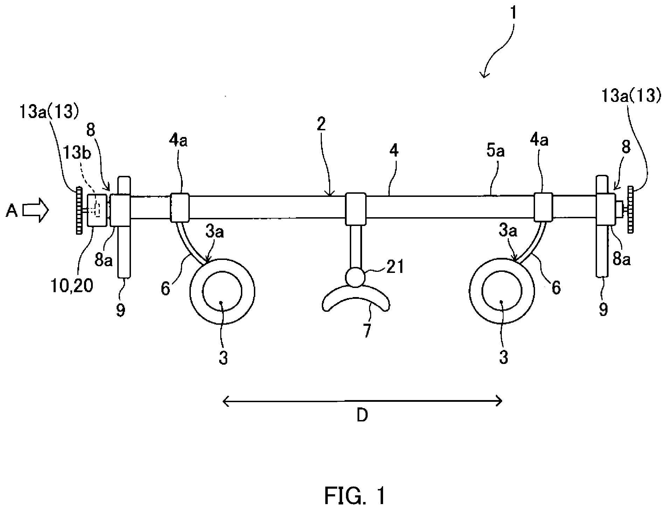

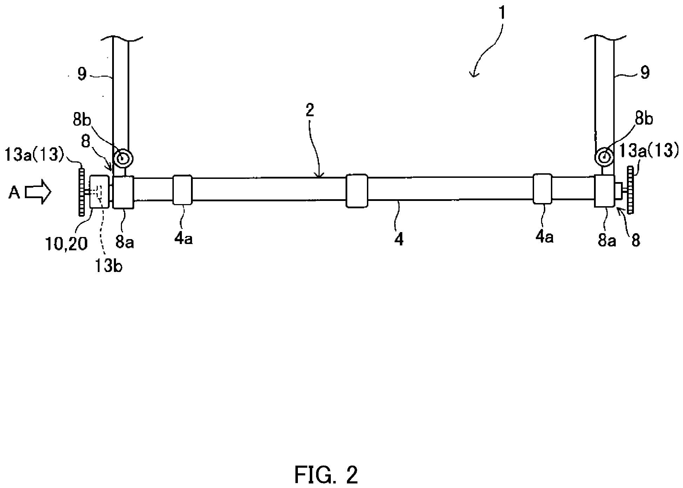

FIG. 1 is a front view schematically showing a configuration of spectacles 1 according to the embodiment 1, and FIG. 2 is a plan view schematically showing a configuration of spectacles 1 according to the embodiment 1.

The spectacles 1 according to the embodiment 1 include a spectacle frame 2, a pair of left and right variable focus lenses 3, 3, and a control apparatus 10 as a lens control apparatus that controls the focal lengths of the variable focus lenses 3, 3.

The spectacle frame 2 includes a bridge portion 4, a pair of left and right lens-holding portions 6, 6, a nose-pad portion 7, a pair of left and right endpiece portions 8, 8, and a pair of left and right temple portions 9, 9.

The bridge portion 4 is a member that is disposed at a position upwardly out of a wearer's field of vision when worn, and supports the left and right lens-holding portions 6, 6 that hold the variable focus lenses 3, 3. The bridge portion 4 extends in the left-right direction between the left and right endpiece portions 8, 8, and the endpiece portions 8, 8 are attached to both ends of the bridge portion 4 in the left-right direction. The bridge portion 4 is preferable to include an inter-lens-distance adjustment portion that connects the lens-holding portion 6 so that the lens-holding portion 6 can move in the left-right direction, and can adjust an inter-inter-lens distance D in the left-right direction of the pair of left and right variable focus lenses 3, 3 held by the lens-holding portion 6. Note that the inter-inter-lens distance D can be defined, for example, by a distance between the reference positions on the variable focus lenses 3, 3 (for example, center positions of the variable focus lenses 3, 3). Here, the reference positions of the variable focus lenses 3, 3 are equal to, for example, optical center positions of the variable focus lenses 3, 3, and the inter-inter-lens distance D is equal to a distance between optical centers of each variable focus lens 3, 3.

The lens-holding portions 6, 6 are members that hold the variable focus lenses 3, 3, and have an elongated shape (linear shape). Specifically, the lens-holding portions 6, 6 of the embodiment 1 are formed of plastically deformable wire members. The lens-holding portion 6 in the embodiment 1 extends from the bridge portion 4 of the spectacle frame 2, and holds the variable focus lens 3 by connecting its tip to a connected position 3a of an outer edge part of the variable focus lens 3. The lens-holding portion 6 is supported by the bridge portion 4 via a slide portion 4a, and the slide portion 4a constitutes the inter-lens-distance adjustment portion. Specifically, the slide portion 4a is a member that holds the lens-holding portion 6 slidably in the left-right direction with respect to the bridge portion 4. The slide portion 4a in the embodiment 1 is a hollow member, and is attached to the bridge portion 4 so as to be slidable along a longitudinal direction of the bridge portion 4 by inserting the bridge portion 4 into a hollow part thereof.

By providing the inter-lens-distance adjustment portion, the inter-lens distance D between the variable focus lenses 3, 3 can be adjusted in accordance with a pupillary distance PD of the user in a normal state. When the variable focus lenses 3, 3 are smaller than normal eyeglass lenses as in the embodiment 1, it is beneficial to be able to adjust the inter-lens distance D of the variable focus lenses 3, 3 for each user to match the user's interpupillary distance PD.

In the embodiment 1, the connected positions 3a of the variable focus lenses 3, 3 to which the lens-holding portions 6, 6 are connected are respectively positioned on outsides (on a side far from a nose, that is, on an ear side) of vertical imaginary lines passing through optical axes of the variable focus lenses 3, 3, as shown in FIG. 1, and above a horizontal imaginary line passing through the optical axes of the variable focus lenses 3, 3. By configuring the lens-holding portions 6, 6 to be connected to this position, even if the lens-holding portions 6, 6 are in the wearer's field of vision, the lens-holding portions 6, 6 are less likely to feel like an obstruction.

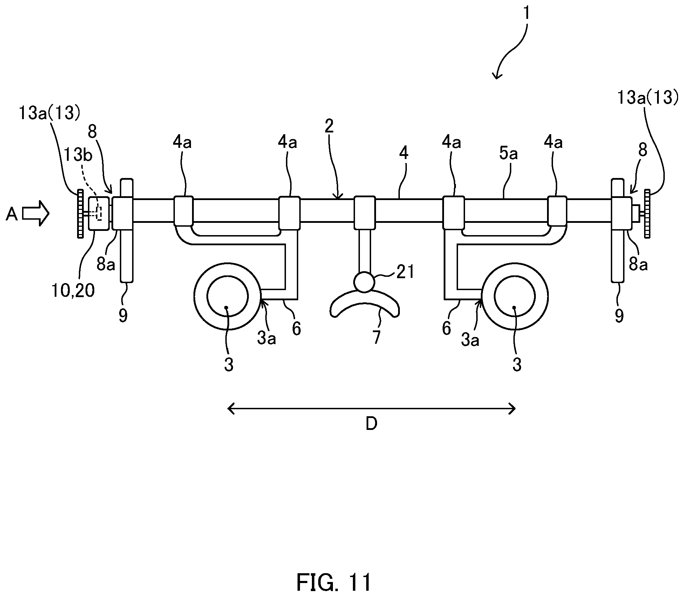

However, the connected positions 3a of the variable focus lenses 3, 3 to which the lens-holding portions 6, 6 are connected are not limited to the position of the embodiment 1, and for example, as shown in FIG. 11, it may be positioned on insides (on a nose side) of the vertical imaginary lines passing through the optical axes of the variable focus lenses 3, 3.

The nose-pad portion 7 is a member that is held by the bridge portion 4 and comes into contact with the user's nose to position the spectacles 1 when the user wears the spectacles 1.

The endpiece portions 8, 8 are members that connect the bridge portion 4 and the temple portions 9, 9. The endpiece portions 8, 8 in the embodiment 1 include a mounting portion 8a that is attached to the end of the bridge portion 4, and a hinge portion 8b that rotatably supports the temple portion 9.

The temple portions 9, 9 are members that are hung on the user's ears when the user wears the spectacles 1. The left and right temple portions 9, 9 in the embodiment 1 are configured so that they can be folded toward a center in the left-right direction of the spectacles 1 by hinge portions 8b provided in the endpiece portions 8, 8, respectively.

The variable focus lenses 3, 3 in the present embodiment 1 are not limited to the above configuration as long as they have an electrically controllable focal length changing function. However, it is preferable that the variable focus lenses 3, 3 are shape-variable lenses whose focal length changes as a shape of a refractive surface changes. Among shape-variable lenses, a liquid lens (also called an electrowetting device, etc.) that uses an interface between two types of liquids as a refractive surface and can change a focal length by electrically controlling a wettability of liquid and changing a shape of the interface, is preferable. The liquid lens allows high-speed and highly flexible control of the focal length.

The variable focus lenses 3, 3 in the embodiment 1 are liquid lenses whose lens parts have a diameter of about 5 mm to 12 mm, for example. Note that by using a larger variable focus lens, a range of the user's line of sight that can be covered by the variable focus lens is expanded, and user convenience can be improved.

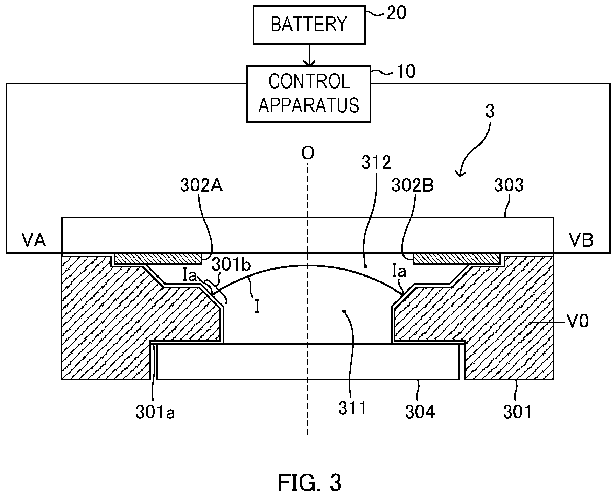

FIG. 3 is a cross-sectional view schematically showing a configuration of the variable focus lens 3 in the embodiment 1.

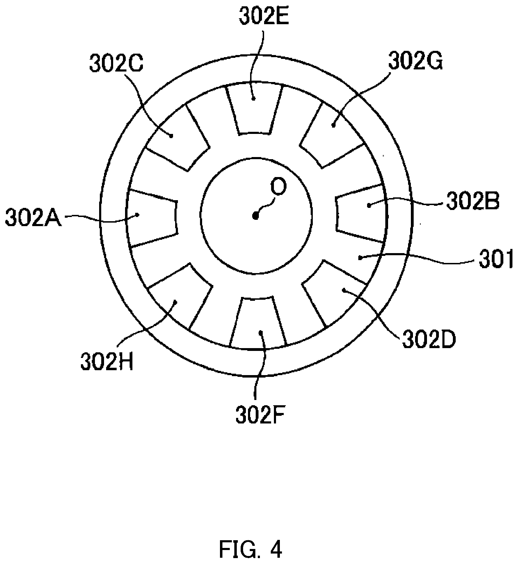

FIG. 4 is a plan view schematically showing a configuration of the variable focus lens 3 in the embodiment 1.

As shown in FIG. 3, the variable focus lens 3 of the embodiment 1 has a configuration in which an insulating liquid 311 and a conductive liquid 312, which are in contact with each other in an unmixed state at an interface I, are enclosed by an annular first electrode 301 and two transparent window members 303 and 304 that close upper and lower ends of the first electrode 301. The insulating liquid 311 is, for example, an oil-based liquid, and the conductive liquid 312 is, for example, an aqueous liquid with relatively low conductivity. A voltage V0 is applied to the first electrode 301, but in the embodiment 1, since the annular first electrode 301 is grounded, the voltage V0 is equal to 0V. Further, the first electrode 301 is insulated from the insulating liquid 311 and the conductive liquid 312 sealed therein by an insulating layer 301a.

Further, in the variable focus lens 3 of the embodiment 1, a plurality of pairs of second electrodes 302A, 302B, ... are arranged at symmetrical positions with respect to an axis O of the first electrode 301. In the embodiment 1, as shown in FIG. 4, four pairs of second electrodes 302A to 302H are arranged on a circumference centered on the axis O, and a total of eight second electrodes 302A to 302H are provided.

As shown in FIG. 3, the second electrodes 302A to 302H are arranged at positions in contact with the conductive liquid 312. When voltages VA to VH are applied to each of the second electrodes 302A to 302H, a potential difference is generated between each of the second electrodes 302A to 302H and the first electrode 301, and due to the electrowetting effect, an end part Ia of the insulating liquid 311 (an end part Ia of the interface I) can be displaced along an insulating layer part 301b on the first electrode 301. By displacing the end part Ia of the insulating liquid 311 in this way, a shape of the insulating liquid 311 changes and a curvature of the interface I changes. Therefore, by controlling the voltages VA to VH applied to the second electrodes 302A to 302H, it is possible to change the focal length of the variable focus lens 3 whose refractive surface is the interface I.

In particular, in the variable focus lens 3 of the embodiment 1, by controlling the voltages VA to VH applied to the second electrodes 302A to 302H, the interface I, which is the refractive surface, can be transformed to a diffusing lens (concave lens), a plane lens, or a condensing lens (convex lens). Therefore, the spectacles 1 of the embodiment 1 can be used as spectacles for near-sighted users by making the variable focus lens 3 the diffusing lens (the concave lens), and be used as spectacles for far-sighted users by making the variable focus lens 3 the condensing lens (the convex lens).

The variable focus lens 3 of the embodiment 1 can change the focal length within a range of -15D or more and +15D or less in diopter conversion (reciprocal of focal length). By using the variable focus lens 3 having such a wide range of change in focal length, for example, it is possible to accommodate users with low visual acuity such as low-vision.

In the embodiment 1, by applying the same voltage to all the second electrodes 302A to 302H arranged at symmetrical positions with respect to the axis O of the first electrode 301, it is possible to change the focal length while keeping the optical axis of the variable focus lens 3 aligned with the axis O of the first electrode 301. On the other hand, by applying different voltages to each of the second electrodes 302A to 302H, it is possible not only to change the focal length but also to shift or tilt the optical axis of the variable focus lens 3. In other words, the variable focus lens 3 of the embodiment 1 can change either a position or a direction of the optical axis, or both, by controlling the applied voltages VA to VH.

As shown in FIG. 1, the control apparatus 10 is provided, together with a battery 20, in one of the left and right endpiece portions 8, 8 (the right endpiece portion 8 (the left side in the figure)). The control apparatus 10 can control the focal length of the variable focus lens 3 by controlling a voltage applied from the battery 20 to each second electrode 302A to 302H of the variable focus lens 3.

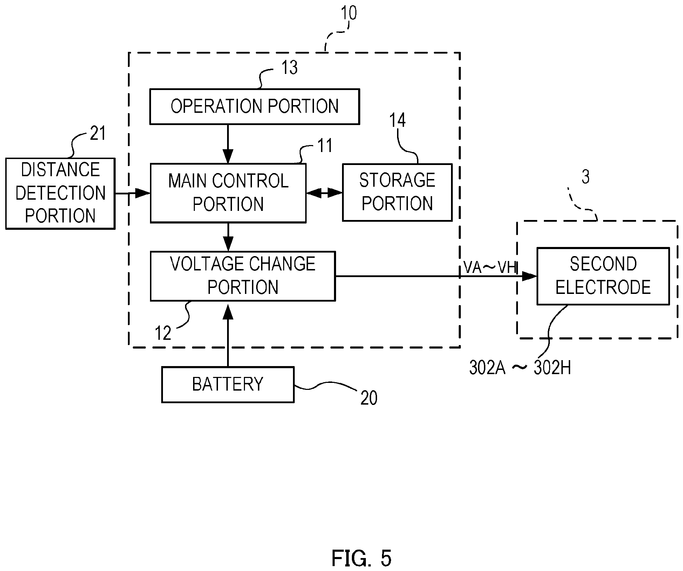

FIG. 5 is a block diagram showing the configuration of the control apparatus 10 in the embodiment 1.

The control apparatus 10 in the present embodiment 1 includes a main control portion 11, a voltage change portion 12, an operation portion 13, and a storage portion 14. The control apparatus 10 is connected to the second electrodes 302A to 302H of the two variable focus lenses 3, 3, a battery 20 as a power source for supplying voltage, and a distance detection portion 21 for detecting a distance to a view object that the user views through the variable focus lenses 3, 3.

The main control portion 11 is, for example, constituted by a control board (computer) on which a CPU, RAM, ROM, etc. are mounted, and performs overall control of the spectacles 1, which is an ophthalmic lens apparatus, by executing a predetermined control program stored in the ROM. In particular, in the embodiment 1, the main control portion 11 functions as a control portion (control means) that controls the variable focus lenses 3, 3 so as to change the focal lengths of the variable focus lenses 3, 3 based on a view distance (detection result) to the view object detected by the distance detection portion 21.

The voltage change portion 12 changes the voltage applied from the battery 20 to each of the second electrodes 302A to 302H of the variable focus lens 3 under the control of the main control portion 11. The voltage change portion 12 can individually change the voltage applied to each of the second electrodes 302A to 302H for each of the second electrodes 302A to 302H. However, the voltage change portion 12 may partially change only some of the second electrodes 302A to 302H (for example, only one pair of second electrodes).

The operation portion 13 is operated by the user to output an operation signal indicating an operation detail of the user to the main control portion 11. Examples of user operations received by the operation portion 13 include a power on/off operation, an execution instruction for the main control portion 11, and a change of control detail of the main control portion 11. In particular, the operation portion 13 in the present embodiment 1 receives user operations for changing the focal lengths of the two variable focus lenses 3, 3.

The operation portion 13 is configured with an operation device of a type suitable for a content of the user operation to be received (a button such as a mechanical button or electrostatic touch button, or a rotary operation portion such as a dial, etc.). The operation portion 13 of the present embodiment 1 is configured with two dial portions 13a, 13a of a rotary operation type and a button portion 13b of a button operation type.

The dial portions 13a, 13a of the rotary operation type are provided on the sides of the left and right endpiece portions 8, 8, respectively, as shown in FIG. 1 and FIG. 2, and are configured to be rotatable around a rotation axis extending in the left-right direction. The dial portion 13a provided on the left endpiece portion 8 receives an instruction operation to shorten the focal length of the variable focus lens 3 for the left eye when rotated counterclockwise, and receives an instruction operation to lengthen the focal length of the variable focus lens 3 for the left eye when rotated clockwise. The dial portion 13a provided on the right endpiece portion 8 receives an instruction operation to shorten the focal length of the variable focus lens 3 for the right eye when rotated clockwise, and receives an instruction operation to lengthen the focal length of the variable focus lens 3 for the right eye when rotated counterclockwise.

The button portion 13b of the button operation type is provided on the rotation axis of the dial portion 13a provided on the right endpiece portion 8, and an instruction operation of the user is received by pushing the dial portion 13a along the rotation axis in a direction of arrow A in FIG. 1 and FIG. 2. In the present embodiment 1, the button portion 13b receives a switching operation for switching an operation mode of the main control portion 11, an instruction operation of the user's decision, and the like.

The switching operation by the button portion 13b in the present embodiment 1 is an operation for switching between a setting mode and a use mode. The setting mode is an operation mode for setting focal-length-specifying-information used in an automatic control mode described later, and sets a suitable focal length for the user according to the view distance detected by the distance detection portion 21. The use mode is an operation mode for controlling the focal lengths of the variable focus lenses 3, 3 in the automatic control mode or a manual control mode, described later.

The instruction operation of the user's decision by the button portion 13b in the present embodiment 1 is, for example, an instruction operation of decision performed when the suitable focal length is determined by searching for (measuring) a focal length that suits the user while operating the dial portions 13a, 13a to change the focal length of each variable focus lens 3, 3.

The storage portion 14 stores programs and data used by the control apparatus 10. In particular, in the present embodiment 1, the focal-length-specifying-information for specifying the focal lengths of the variable focus lenses 3, 3 according to the distance to the view object is stored as data used for controlling the focal lengths of the variable focus lenses 3, 3 in the automatic control mode.

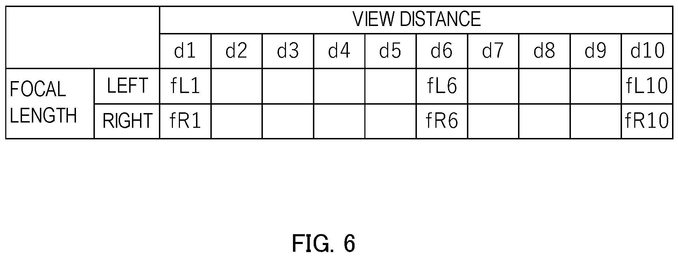

The focal-length-specifying-information is, for example, information indicating a relationship between the view distance to the view object (the detection result of the distance detection portion 21) and each of the suitable focal lengths for the user in the two variable focus lenses 3, 3 (focal lengths suited to the user corresponding to each view distance). Such information can be stored in the storage portion 14 as table data describing a correspondence between the view distance and the focal lengths of the two variable focus lenses 3, 3, for example, as shown in FIG. 6.

In particular, in the present embodiment 1, in the setting mode, the distance to each of the setting-use view objects when the user views each of the setting-use view objects located at a plurality of different distances, and each focal length (suitable focal length) of the variable focus lenses 3, 3 at which the user focuses on each of the setting-use view objects are acquired, and the focal-length-specifying-information is generated based on these distances and suitable focal lengths. This makes it possible to generate the focal-length-specifying-information suitable for each individual user, and therefore the focal lengths of the two variable focus lenses 3, 3 can be adjusted to the suitable focal length for each user by the automatic control mode in the use mode.

The battery 20 functions as the power source of the control apparatus 10, and outputs the voltage to be supplied to the second electrodes 302A to 302H of the variable focus lens 3. The battery 20 may be a primary battery or a secondary battery. Alternatively, it may be equipped with a power generation function such as a solar panel.

The configuration of the distance detection portion 21 is not limited as long as it can detect the distance to the view object present in an area (view area) in front of the variable focus lenses 3, 3, but it is preferable that the distance detection portion 21 is disposed on the spectacle frame 2, particularly in a vicinity of the variable focus lenses 3, 3. The distance detection portion 21 in the present embodiment 1 is disposed on the nose-pad portion 7 as shown in FIG. 1, but may also be disposed on the bridge portion 4 or endpiece portions 8, 8, etc. However, since it is preferable that the distance detection portion 21 is disposed in a position where it is least likely to be covered by hair (bangs) when the user wears the spectacles 1, it is preferable to dispose it as low as possible on the front of the spectacles 1 (on the nose-pad portion 7) as in the present embodiment 1.

A distance measurement method in the distance detection portion 21 is not particularly limited, and a wide variety of existing distance measurement methods can be adopted, such as a laser method, a sound wave method, etc. If it is difficult for one distance detection portion to cover a range of view distances (range from close to long distances) to be detected by the distance detection portion 21, multiple distance detection portions with different ranges of an effective detection distance (distance ranges in which detection with high accuracy is possible) may be arranged.

Next, an example of control of the focal lengths of the variable focus lenses 3, 3 in the embodiment 1 will be explained.

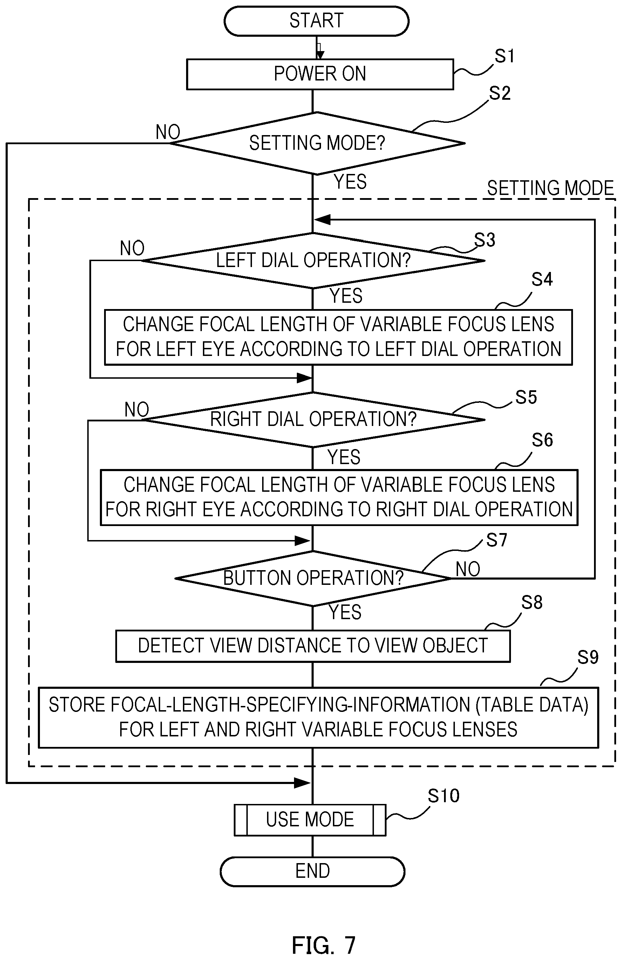

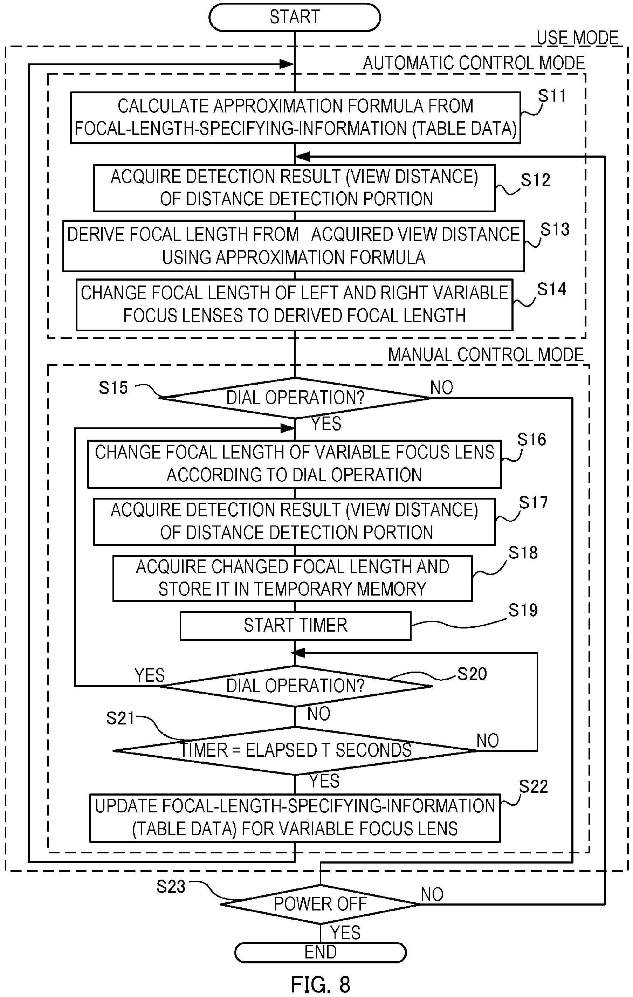

FIG. 7 and FIG. 8 are flowcharts showing a flow of focal length control in the embodiment 1. However, FIG. 7 shows a control content in the setting mode, and FIG. 8 shows a control content in the use mode.

In the focal length control of the present embodiment 1, the main control portion 11, which executes a predetermined control program, controls the voltage change portion 12 to execute the automatic control mode in which the focal lengths of the variable focus lenses 3, 3 are controlled based on the view distance (detection result) to the view object detected by the distance detection portion 21 and the focal-length-specifying-information in the storage portion 14, and the manual control mode in which the focal lengths of the variable focus lenses 3, 3 are controlled based on the instruction operations on the dial portions 13a, 13a of the operation portion 13.

In the present embodiment 1, when the operation portion 13 receives a power-on operation by a user (S1), it first receives the switching operation to switch the operation mode of the main control portion 11 to the setting mode or the use mode (S2). Specifically, after the power-on operation, if the button portion 13b is pushed within a predetermined time, the mode transitions to the setting mode (Yes in S2), and if the button portion 13b is not pushed within the predetermined time, the mode transitions to the use mode (No in S2). Note that, although this is an example in which the focal length control is started by the power-on operation, the present invention is not limited to this, and therefore, for example, it may be configurated so that a wearing detection portion for detecting that the spectacles 1 are worn by the user may be provided, and the focal length control may be started by detecting that the spectacles 1 are worn by the user.

When the setting mode is entered (Yes in S2), the main control portion 11 functions as a setting process portion and executes a program for operating in the setting mode to start the setting process. In the setting mode, the user first rotates the left dial portion 13a while viewing the view object (setting-use view object) at a reference view distance (for example, a long distance) (Yes in S3). As a result, an operation signal is sent from the operation portion 13 as a focal-length determination portion to the main control portion 11, and the main control portion 11 controls the voltage change portion 12 so that a voltage corresponding to the operation signal is applied to the second electrodes 302A to 302H of the variable focus lens 3 for the left eye. As a result, the curvature of the interface I between the insulating liquid 311 and the conductive liquid 312 in the variable focus lens 3 for the left eye is changed due to a change in shape of the interface I, and the focal length of the variable focus lens 3 for the left eye is changed in response to the user's operation on the left dial portion 13a (S4).

Then, after adjusting the focal length of the variable focus lens 3 for the left eye by turning the left dial portion 13a so that a focus is on the view object at a reference distance (setting-use view object), the user then turns the right dial portion 13a while viewing the view object at the same reference distance (Yes in S5). As a result, an operation signal is sent from the operation portion 13 as the focal-length determination section to the main control portion 11, and the main control portion 11 controls the voltage change section 12 so that a voltage corresponding to the operation signal is applied to the second electrodes 302A to 302H of the variable focus lens 3 for the right eye. As a result, the curvature of the interface I between the insulating liquid 311 and the conductive liquid 312 in the variable focus lens 3 for the right eye is changed due to a change in shape of the interface I, and the focal length of the variable focus lens 3 for the right eye is changed in response to the user's operation on the right dial portion 13a (S6).

In this way, after adjusting the focal lengths of the left and right variable focus lenses 3, 3 by turning the left and right dial portions 13a, 13a so that the view object at the reference distance is in focus, the user pushes the button portion 13b (Yes in S7). The main control portion 11 receives this button operation signal from the operation portion 13 as a focal-length determination portion, and acquires the detection result of the view distance detected by the distance detection portion 21 for the view object at the reference distance (the setting-use view object) (S8). Then, the main control portion 11 stores the focal lengths of the left and right variable focus lenses 3, 3 at the time when the button portion 13b is pushed and the acquired detection result of the view distance, as the focal-length-specifying-information, in the storage portion 14 (S9).

For example, if the detection result of the view distance detected by the distance detection portion 21 is d10, the main control portion 11 adds d10 as view distance data in the table data shown in FIG. 6. Then, the main control portion 11 stores fL10 and fR10, which are the focal lengths (suitable focal lengths) adjusted by the user, as the focal lengths of the left and right variable focus lenses 3, 3 corresponding to the view distance d10.

When executing the automatic control mode, it is desirable to set the user's suitable focal length for as many view distances as possible. The user can set the user's suitable focal length (fL1, fL6, fL10, fR1, fR6, fRIO in FIG. 6) for a plurality of view distances (three points, d1, d6, d10 in FIG. 6) by repeating a work of changing the view distance to the view object and executing the setting mode described above.

Next, the use mode will be explained.

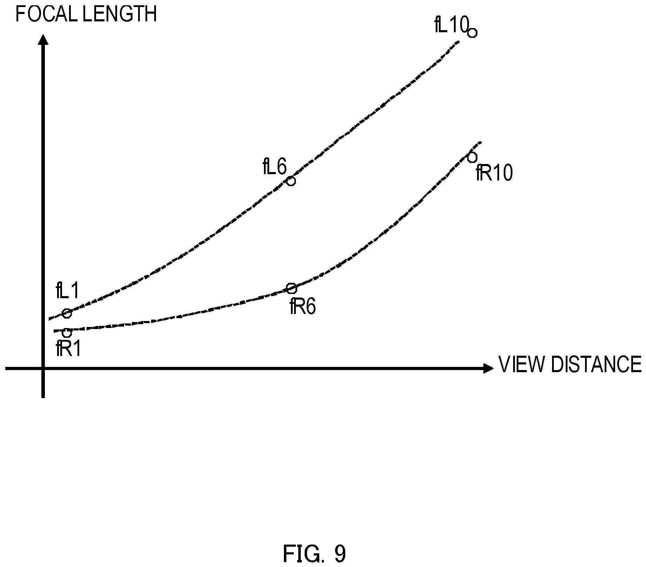

If the button portion 13b is not pushed within the predetermined time after the power-on operation or if the setting mode is finished, the mode transitions to the use mode shown in FIG. 8 (S10). When the mode transitions to the use mode, the main control portion 11 first calculates an approximation formula as shown in a graph in FIG. 9 from the focal-length-specifying-information stored in the storage portion 14 (for example, the table data shown in FIG. 6) (S11).

This approximation formula is a formula showing a relationship between the view distance detected by the distance detection portion 21 and the suitable focal distance for the user at this view distance, and is a formula that represents an approximation line when the focal-length-specifying-information (table data) stored in the storage portion 14 is plotted, as shown in FIG. 9. The approximation formula can be calculated using, for example, the least squares method or the Hough transform. Note that, although the present embodiment 1 is an example in which the table data used to calculate the approximation formula is stored in the storage portion 14 as the focal-length-specifying-information, the approximation formula may also be stored in the storage portion 14 as the focal-length-specifying-information.

After calculating the approximation formula in this way, the main control portion 11 acquires the detection result of the view distance from the distance detection portion 21 to the view object (S12). After that, the main control portion 11 derives the suitable focal length corresponding to the acquired view distance (detection result) by the approximation formula calculated in the process step S11 (S13). Then, the main control portion 11 controls the voltage change portion 12 to change the voltage applied to the second electrodes 302A to 302H of the left and right variable focus lenses 3, 3 so that the focal lengths of the left and right variable-focus lenses 3, 3 become the derived suitable focal lengths. As a result, the focal lengths of the left and right variable focus lenses 3, 3 are changed to the focal lengths suitable for the user (S14), and the view object is automatically brought into focus.

For example, when a user views a near view object (such as a smartphone, tablet, game console, or book), the focal lengths of the left and right variable focus lenses 3, 3 are automatically changed so as to focus on the near view object. Also, for example, when a user views a far view object (such as a video from a distant location (movie, etc.), an object of appreciation such as a work of art, or a landscape), the focal lengths of the left and right variable focus lenses 3, 3 are automatically changed so as to focus on the far view object. Also, for example, when a user views a medium-distance view object such as while driving a car, the focal lengths of the left and right variable focus lenses 3, 3 are automatically changed so as to focus on the medium-distance view object.

Here, an eye condition (such as visual acuity and optical power accommodation function) that is related to the user's focusing on the view object changes, for example, when a refractive error of the eye progresses or improves. The eye condition can also change, for example, depending on the illuminance (brightness) of the view area. Therefore, the focal length (suitable focal length) of the variable focus lens at which the user is focused is not uniformly determined according to the view distance to the view object, but can change depending on the eye condition of the user. Therefore, the eye condition of the user may change from the condition in the setting mode described above, and in this case, in the automatic control mode, it is no longer possible to adjust the focal lengths of the variable focus lenses 3, 3 to suit the wearer according to the view distance to the view object.

Therefore, in the present embodiment 1, not only the automatic control mode but also the manual control mode in which the focal length of the variable focus lens can be adjusted by the user's operation can be executed. Specifically, when the user cannot focus on the view object during the automatic control mode, the user turns the dial portions 13a, 13a of the operation portion 13 (Yes in S15), thereby the operation signal is sent to the main control portion 11, and the main control portion 11 transitions to the manual control mode.

When the manual control mode is entered, the automatic control mode is stopped, and the main control portion 11 controls the voltage change portion 12 in response to the operation signal of the operated dial portion 13a, 13a, and changes the voltage applied to the second electrodes 302A to 302H of the variable focus lenses 3, 3 corresponding to the dial portions 13a, 13a. As a result, the focal lengths of the variable focus lenses 3, 3 are changed in response to the user's operations of the operated dial portions 13a, 13a (S16).

If the change in the user's eye condition is temporary (e.g., if the illuminance in the view area changes), the focal lengths of the variable focus lenses 3, 3 can be adjusted again to suit the user by the automatic control mode described above if the user's eye condition returns to the condition in the setting mode described above. However, if the change in the user's eye condition is continuous (e.g., if refractive error of the eye progresses or improves), the user's eye condition does not return to the condition in the setting mode described above. Therefore, in the automatic control mode as it is, the focal length of the variable focus lenses 3, 3 cannot be adjusted to suit the user.

In the present embodiment 1, in order to enable the focal lengths of the variable focus lenses 3, 3 to be adjusted in the automatic control mode to suit the user even if the change in the user's eye condition is continuous, a process is performed to update the focal-length-specifying-information (table data) stored in the storage portion 14 using a result of the manual control mode.

In the update process (setting process) of the present embodiment 1, when the user operates the dial portions 13a, 13a to adjust the focal lengths of the variable focus lenses 3, 3 in the manual control mode, the focal-length-specifying-information (table data) stored in the storage portion 14 is updated using a control result in this manual control mode (control result of the focal lengths of the variable focus lenses) and a detection result of the distance detection portion 21 at this time (distance to the view object (setting-use view object)). Since the focal-length-specifying-information updated in this way is updated by the suitable focal length after the user's eye condition has changed, in the subsequent automatic control mode, the focal lengths of the variable focus lenses 3, 3 are controlled in accordance with the user's eye condition after the change. Therefore, even after the continuous change in the user's eye condition, the focal lengths of the variable focus lenses 3, 3 can be adjusted in the automatic control mode to suit the user.

In the present embodiment 1, as shown in FIG. 8, when the focal lengths of the variable focus lenses 3, 3 are changed in the manual control mode (S16), the main control portion 11 acquires the detection result of the view distance to the view object detected by the distance detection portion 21 (S17). Then, the main control portion 11 temporarily stores the control result in the manual control mode (the focal lengths of the variable focus lenses 3, 3 after the change) in a temporary storage area (temporary memory) of the storage portion 14 for the variable focus lenses 3, 3 whose focal lengths have been changed, in association with the view distance corresponding to the acquired detection result of the distance detection portion 21 (S18). After that, the main control portion 11 starts a timer corresponding to the variable focus lenses 3, 3 whose focal lengths have been changed (S19).

If the user operates the dial portions 13a, 13a for the corresponding variable focus lens 3, 3 (Yes in S20) before T seconds have elapsed on the timer (No in S21), the main control portion 11 resets the timer and also resets data in the temporary memory, and changes the focal length of the variable focus lens 3, 3 according to the user's operation (S16). After that, the main control portion 11 again acquires the detection result of the view distance to the view object detected by the distance detection portion 21 (S17), and temporarily stores the control result in the manual control mode (the focal length of the variable focus lens 3, 3 after the change) in the temporary storage area (temporary memory) of the storage portion 14 (S18). Then, the main control portion 11 starts the timer again corresponding to the variable focus lens 3, 3 whose focal length has been changed (S19).

On the other hand, if the timer has elapsed T seconds (Yes in S21) without the user operating the dial portions 13a, 13a for the corresponding variable focus lenses 3, 3 (No in S20), the main control portion 11 updates the focal-length-specifying-information (table data) stored in the storage portion 14 using the view distance stored in the temporary memory and the control result in the manual control mode (S22).

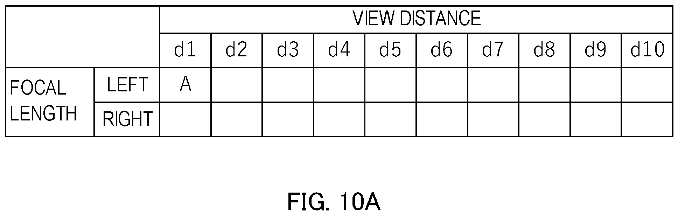

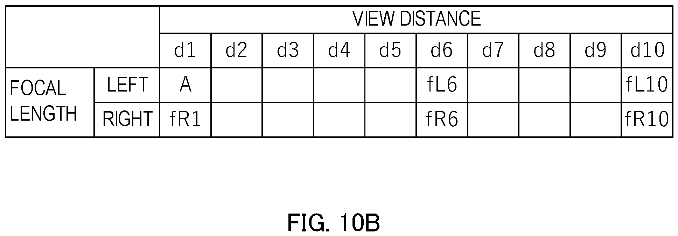

For example, as shown in FIG. 10A, when a focal length A corresponding to a view distance d1 for the variable focus lens 3 for the left eye is stored in the temporary memory and the timer has elapsed T seconds, the main control portion 11 stores the focal length A as a focal length fL1 corresponding to the view distance d1 in the focal-length-specifying-information (table data) stored in the storage portion 14 as shown in FIG. 10B. At this time, if the focal length fL1 corresponding to the view distance d1 has already been stored as the focal-length-specifying-information (table data) stored in the storage portion 14, it is overwritten with the focal length A.

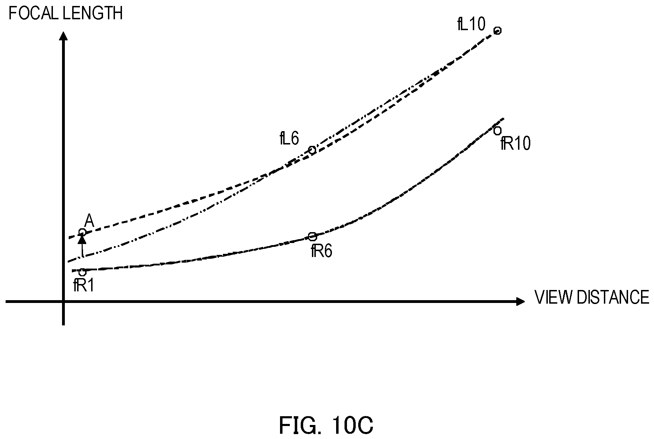

When the update process is finished in this manner, the main control portion 11 switches to the automatic control mode, returns to the process step S11, and calculates a new approximation formula shown by a dotted line (the approximation formula before the update is shown by the two-dot chain line) as shown in FIG. 10C using the updated focal-length-specifying-information (table data) stored in the storage portion 14 (S11). After that, the main control portion 11 executes the automatic control mode using this new approximation formula, and the focal lengths of the left and right variable focus lenses 3, 3 are changed to the focal lengths suitable for the user according to the detection result (view distance) of the distance detection portion 21 (S12 to S14). In the automatic control mode after the update, the focal lengths of the variable focus lenses 3, 3 are controlled according to the user's eye condition after the change, so that the focal lengths of the variable focus lenses 3, 3 can be adjusted to suit the user by the automatic control mode even after the continuous change in the user's eye condition.

In the present embodiment 1, when the operation portion 13 receives a power-off operation by the user (Yes in S23), the main control portion 11 finishes the focal length control. At this time, the voltage supply to each of the second electrodes 302A to 302H of the variable focus lens 3 may be turned off or on. If the voltage supply to each of the second electrodes 302A to 302H of the variable focus lens 3 is turned off, a power consumption of the battery 20 can be saved.

According to the present embodiment 1, when the focal lengths of the variable focus lenses 3, 3 can be adjusted to suit the user in the automatic control mode, the view object is automatically in focus without any special operation. On the other hand, when the focal lengths of the variable focus lenses 3, 3 cannot be adjusted to suit the user in the automatic control mode, the user can manually focus on the view object by operating the dial portions 13a, 13a.

In particular, as in the present embodiment 1, if the update process (setting process) is executed to update the focal-length-specifying-information stored in the storage portion 14 using the control result of the manual control mode, the focal lengths of the variable focus lenses 3, 3 can be adjusted in the automatic control so as to suit the user even after the continuous change in the user's eye condition.

In the update process of the present embodiment 1, an example in which the focal-length-specifying-information in the storage portion 14 is overwritten using the latest control result in the manual control mode has been described, but the present invention is not limited to this. For example, the control result in the manual control mode may not be overwritten, and may be stored as history information together with past control results in the storage portion 14 as a history storage portion. In this case, for example, as shown in FIG. 10A, the focal length fL1 corresponding to the view distance d1 may be calculated from the focal length data A corresponding to the view distance d1 stored in the temporary memory and the past data corresponding to the view distance d1 already stored in the storage portion 14. For example, an average value of the most recent five focal length data corresponding to the view distance d1 may be set as the focal length fL1 corresponding to the view distance d1 stored in the storage portion 14. In addition, when the latest data is significantly different from the data of the history information up to now, the latest data may be processed as an abnormal value.

By storing the history information in this manner, it becomes possible to observe over time a difference between the focal length automatically adjusted in the automatic control mode and the focal length manually adjusted by the user in the manual control mode. Such observation over time is also useful for grasping a change in the user's eye condition, and can be useful in discovering abnormalities, diseases, etc., in the user's eyes.

In the present embodiment 1, the control result in the manual control mode (control result of the focal length of the variable focus lens) stored in the storage portion 14 uses the control result when the user does not operate the dial portion 13a until T seconds have elapsed on the timer after the user operates the dial portion 13a, but is not limited to this. For example, when the user operates the dial portion 13a in the manual control mode to adjust the focal length of the variable focus lens 3, the user often operates the dial portion 13a to lengthen or shorten the focal length, and then, after the focal length when in focus has passed through, the user conversely operates the dial portion 13a to shorten or lengthen the focal length, thereby the user finally adjusts to the focal length when in focus. In consideration of this, the control result when the user operates the dial portion 13a to lengthen or shorten the focal length and then, conversely to shorten or lengthen the focal length may be used. This allows operations unrelated to the focusing operation, such as erroneous operation of the dial portion 13a, to be eliminated, and the focal length adjusted by the instruction operation for focusing to the dial portion 13a can be used with high accuracy as the control result in the manual control mode stored in the storage portion 14.

In the present embodiment 1, the setting process is performed so that an arbitrary view object around the user is used as the setting-use view object to store the focal-length-specifying-information in the storage portion 14, but is not limited to this. For example, the setting process may be performed using a setting-use view object located at a predetermined distance in a sales location of the spectacles 1 according to the embodiment 1 or in a medical institution such as an ophthalmology clinic. In this case, a distance to the setting-use view object that is known in advance may be input to the control apparatus 10 of the spectacles 1, instead of the detection result of the distance detection portion 21 of the spectacles 1, and the setting process may be performed using this input value.

In addition, in the present embodiment 1, the focal-length-specifying-information stored in the storage portion 14 in the setting process by the main control portion 11 is generated in the main control portion 11 of the control apparatus 10 mounted on the spectacles 1, but it may also be generated in an external apparatus. That is, the focal-length-specifying-information generated in the external apparatus may be input to the control apparatus 10 mounted on the spectacles 1, and the setting process may be executed so that the input focal-length-specifying-information is stored in the storage portion 14.

### [Embodiment 2]

Next, another embodiment (hereinafter, the present embodiment will be referred to as "embodiment 2") in which the present invention is applied to spectacles as an ophthalmic lens apparatus equipped with a lens control apparatus will be described.

The spectacles 1 of the present embodiment 2 have the same basic configuration as the above-described embodiment 1, but a control method of the control apparatus 10 is different from that of the above-described embodiment 1. In the following explanation, differences from the above-described embodiment 1 will be mainly explained, and overlapping explanations will be omitted as appropriate.

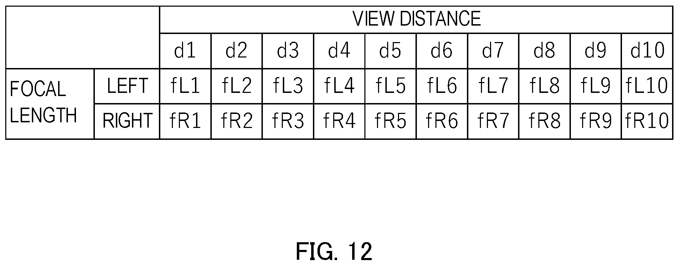

FIG. 12 is an explanatory diagram showing an example of table data that is focal-length-specifying-information stored in the storage portion 14 of the control apparatus 10 in the spectacles 1 according to the embodiment 2.

The focal-length-specifying-information of the embodiment 2 is also information indicating, for example, the relationship between the view distance to the view object (the detection result of the distance detection portion 21) and each of the suitable focal lengths for the user in the two variable focus lenses 3, 3 (focal lengths suited to the user corresponding to each view distance). Such information can be stored in the storage portion 14 as table data describing a correspondence between the view distance and the focal lengths of the two variable focus lenses 3, 3, for example, as shown in FIG. 12.

In the present embodiment 2, in the setting mode, the distance to the setting-use view object when the user views the setting-use view object and the focal lengths of the variable focus lenses 3, 3 at which the user focuses on the setting-use view object are acquired. Then, a correction value is calculated to reduce a difference between the acquired focal length and the focal length corresponding to the view distance in the focal-length-specifying-information stored in the storage portion 14. After that, new focal-length-specifying-information is generated in which not only the focal length corresponding to the view distance but also focal lengths corresponding to other distances are corrected by this correction value, and the focal-length-specifying-information stored in the storage portion 14 is updated with this new focal-length-specifying-information.

The new focal-length-specifying-information updated in this manner has roughly the same outline of the change in the suitable focal length according to the view distance within a predetermined distance range including the acquired distance and the above other distance, but each focal length corresponding to each view distance within the predetermined distance range is shifted by the correction value, in comparison with the focal-length-specifying-information stored in the storage portion. In particular, if each focal length corresponding to the acquired distance and the above other distance is uniformly corrected by the same correction value, the outline of the change in the suitable focal length according to the view distance can be exactly the same, and each focal length corresponding to each view distance can be shifted by the same correction value.

The outline of the change in the suitable focal length according to the view distance can be shown, for example, by a graph in which a horizontal axis represents the view distance to the setting-use view object, and the focal length (suitable focal length) of the variable focus lens 3, 3 at which the user is focused, converted into units of lens optical power. Illuminance conditions of measurement data of measured persons plotted on this graph are, for example, 685 Lx when the view distance is near zero cm, 744 Lx when the view distance is near 180 cm, and 726 Lx when the view distance is near 300 cm. In this measurement, the suitable focal length (lens optical power) is measured at each view distance while changing the view distance to the setting-use view object for a plurality of measured persons with different degrees of visual acuity or refractive error.

The data for one measured person is plotted as is, and the data for the remaining measured persons is shifted along the vertical axis so that an average suitable focal length (lens optical power) for each measured person in the view distance range (distance range where the view distance is long) where the suitable focal length (lens optical power) is approximately constant matches the average value for the one measured person.

According to the graph obtained in this manner, although the average values of the measurement data of each measured person are different from each other, the outline of the change in the suitable focal length according to the view distance is almost the same.

As a result of research including this measurement result, as described above, the inventors have found that the outline of the graph showing the relationship between the distance to the view object (view distance) and the suitable focal length (the outline of the change in the suitable focal length according to the view distance) is roughly the same for both users who do not need to correct their refractive errors with spectacles, etc. and users who have sufficient visual acuity to correct their refractive errors with spectacles, etc. Based on this opinion, if the suitable focal length of a user corresponding to at least one view distance (preferably a distance range in which a rate of the change in the suitable focal length is small) is determined, it is possible to obtain the focal-length-specifying-information suitable for each individual user by using the outline of the change that is common to all users.

According to the present embodiment 2, the focal-length-specifying-information in the storage portion 14 can be updated to new focal-length-specifying-information suitable for the user simply by determining the suitable focal length for the user corresponding to a very small number of view distances, at least one point. Therefore, according to the present lens control apparatus, the focal-length-specifying-information suitable for each user can be obtained without forcing the user to perform complicated works in determining the suitable focal length for the user corresponding to the view distance. As a result, since the focal-length-specifying-information suitable for each user can be generated, the focal lengths of the two variable focus lenses 3, 3 can be adjusted to the suitable focal lengths for each user by the automatic control mode in the use mode.

The focal-length-specifying-information stored in the storage portion 14 before being updated may be the focal-length-specifying-information stored in the storage portion 14 in advance from the beginning of shipment, the focal-length-specifying-information after the previous update by another user, or the focal-length-specifying-information after the previous update by the same user. The focal-length-specifying-information stored in the storage portion 14 in advance from the beginning of shipment may be created from results of measuring the suitable focal length for each view distance over the distance range of the focal-length-specifying-information for one or more measured persons (persons other than the user). The measured persons may be one or more persons with standard visual acuity, or multiple persons with different visual acuity or different degrees of refractive error.

Next, an example of control of the focal lengths of the variable focus lenses 3, 3 in the embodiment 2 will be explained.

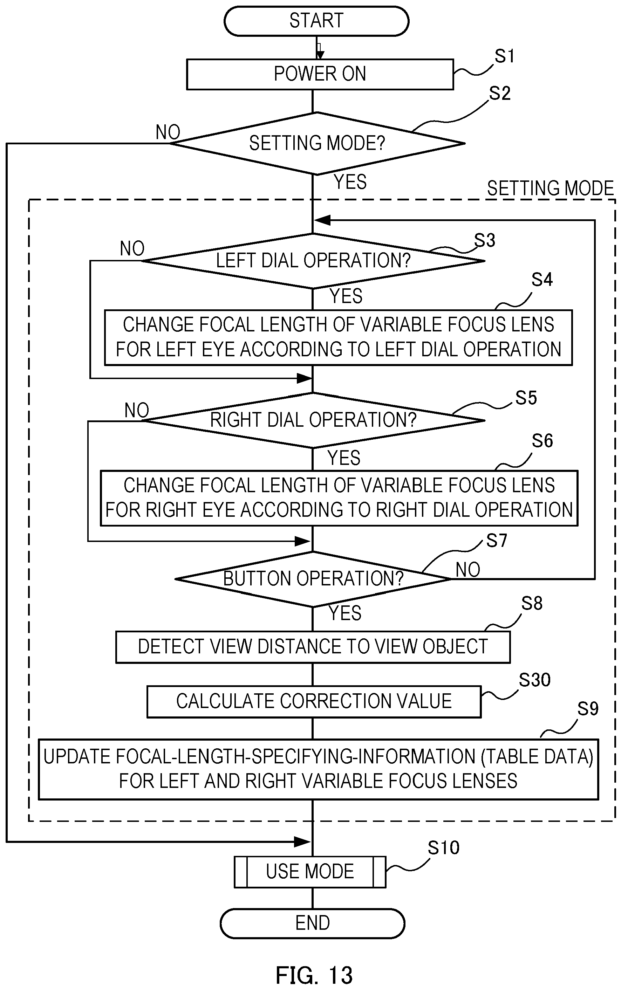

FIG. 13 is a flowchart showing a control content in the setting mode of the focal length control in the present embodiment 2. Note that since a control content in the use mode is similar to those in the above-mentioned embodiment 1, FIG. 8 will be referred to.

In the focal length control of the present embodiment 2 as well, the main control portion 11, which executes the predetermined control program, controls the voltage change portion 12 to execute the automatic control mode in which the focal lengths of the variable focus lenses 3, 3 are controlled based on the view distance (detection result) to the view object detected by the distance detection portion 21 and the focal-length-specifying-information in the storage portion 14, and the manual control mode in which the focal lengths of the variable focus lenses 3, 3 are controlled based on the instruction operations on the dial portions 13a, 13a of the operation portion 13.

In the present embodiment 2 as well, when the operation portion 13 receives the power-on operation by a user (S1), it first receives the switching operation to switch the operation mode of the main control portion 11 to the setting mode or the use mode (S2). Specifically, after the power-on operation, if the button portion 13b is pushed within the predetermined time, the mode transitions to the setting mode (Yes in S2), and if the button portion 13b is not pushed within the predetermined time, the mode transitions to the use mode (No in S2).

When the setting mode is entered (Yes in S2), the main control portion 11 functions as an update process portion and executes a program for operating in the setting mode to start the update process. In the setting mode, the user first rotates the left dial portion 13a while viewing the view object (setting-use view object) at a reference view distance (for example, a long distance) (Yes in S3). As a result, the operation signal is sent from the operation portion 13 as a focal-length determination portion to the main control portion 11, and the main control portion 11 controls the voltage change portion 12 so that the voltage corresponding to the operation signal is applied to the second electrodes 302A to 302H of the variable focus lens 3 for the left eye. As a result, the curvature of the interface I between the insulating liquid 311 and the conductive liquid 312 in the variable focus lens 3 for the left eye is changed due to the change in shape of the interface I, and the focal length of the variable focus lens 3 for the left eye is changed in response to the user's operation on the left dial portion 13a (S4).

Then, after adjusting the focal length of the variable focus lens 3 for the left eye by turning the left dial portion 13a so that the focus is on the view object at the reference distance (setting-use view object), the user then turns the right dial portion 13a while viewing the view object at the same reference distance (Yes in S5). As a result, the operation signal is sent from the operation portion 13 as the focal-length determination section to the main control portion 11, and the main control portion 11 controls the voltage change section 12 so that the voltage corresponding to the operation signal is applied to the second electrodes 302A to 302H of the variable focus lens 3 for the right eye. As a result, the curvature of the interface I between the insulating liquid 311 and the conductive liquid 312 in the variable focus lens 3 for the right eye is changed due to the change in shape of the interface I, and the focal length of the variable focus lens 3 for the right eye is changed in response to the user's operation on the right dial portion 13a (S6).

In this way, after adjusting the focal lengths of the left and right variable focus lenses 3, 3 by turning the left and right dial portions 13a, 13a so that the view object at the reference distance is in focus, the user pushes the button portion 13b (Yes in S7). The main control portion 11 receives this button operation signal from the operation portion 13 as the focal-length determination portion, and acquires the detection result of the view distance detected by the distance detection portion 21 for the view object at the reference distance (the setting-use view object) (S8).

Thereafter, in the present embodiment 2, the main control portion 11 calculates a correction value for updating the focal-length-specifying-information stored in the storage portion 14 from the focal lengths of the left and right variable focus lenses 3, 3 at the time when the button portion 13b is pushed and the acquired detection result of the view distance (S30). Specifically, the main control portion 11 calculates the correction value that reduces a difference between the focal lengths of the left and right variable focus lenses 3, 3 and the focal length corresponding to the view distance in the focal-length-specifying-information stored in the storage portion 14, for example, the correction value that makes this difference zero.

Next, the main control portion 11 uses the calculated correction value to update the focal-length-specifying-information stored in the storage portion 14 (S9). Specifically, instead of the focal lengths fL1 to fLIO and fR1 to fRIO corresponding to a predetermined distance range including the above view distance and other view distances (for example, a range of all distances from d1 to d10 included in the focal-length-specifying-information), the focal lengths fL1' to fL10' and fR1' to fR10' obtained by adding (or subtracting) the correction value to the above focal lengths are overwritten to the table data in the storage portion 14.

The new focal-length-specifying-information updated in this manner has the same outline of the change in the suitable focal lengths fL1 to fL10, fR1 to fRIO corresponding to each of the view distances d1 to d10, but each of the focal lengths fL1' to fL10', fR1' to fR10' corresponding to each of the view distances d1 to d10 is shifted by the correction value, in comparison with the focal-length-specifying-information before the update that was stored in storage portion 14.

Next, the use mode will be explained.

If the button portion 13b is not pushed within the predetermined time after the power-on operation or if the setting mode is finished, the mode transitions to the use mode shown in FIG. 8 (S10). When the mode transitions to the use mode, the main control portion 11 first calculates the approximation formula represented by the graph showing the outline of the change in the suitable focal length according to the view distance from the focal-length-specifying-information stored in the storage section 14 (for example, the table data shown in FIG. 12) (S 11). Note that if the focal-length-specifying-information has been updated in the setting mode described above, the approximation formula is calculated using the updated focal-length-specifying-information (focal lengths fL1' to fL10', fR1' to fR10').

As in the case of the above-described embodiment 1, this approximation formula is the formula showing the relationship between the view distance detected by the distance detection portion 21 and the suitable focal distance for the user at this view distance, and is the formula that represents the approximation line when the focal-length-specifying-information (table data) stored in the storage portion 14 is plotted. The approximation formula can be calculated using, for example, the least squares method or the Hough transform. Note that, although the present embodiment 2 is an example in which the table data used to calculate the approximation formula is stored in the storage portion 14 as the focal-length-specifying-information, the approximation formula may also be stored in the storage portion 14 as the focal-length-specifying-information.

The subsequent control content in the automatic control mode is the same as those in the embodiment 1 described above, and therefore will not be explained.

In the present embodiment 2, in addition to the automatic control mode, the manual control mode in which the focal length of the variable focus lens can be adjusted by the user operation can also be executed. The control content of the manual control mode is also similar to that of the embodiment 1 described above, but the process of updating the focal-length-specifying-information (table data) stored in the storage portion 14 using the result of the manual control mode is different.

Specifically, when the user operates the dial portions 13a, 13a to adjust the focal lengths of the variable focus lenses 3, 3 in the manual control mode, a correction value for updating the focal-length-specifying-information stored in the storage portion 14 is calculated from the control result in the manual control mode (control result of the focal lengths of the variable focus lenses) and the detection result of the distance detection portion 21 at this time (distance to the view object (setting-use view object)), in the same manner as the update process in the setting mode described above. Then, the focal lengths fL1 to fL10, fR1 to fRIO corresponding to the respective view distances in the focal-length-specifying-information in the storage portion 14 are updated with values fL1' to fL10', fR1' to fR10' shifted by the calculated correction value.

Then, in the manual control mode, when the timer has elapsed for T seconds (Yes in S21) without the user operating the dial portions 13a, 13a for the corresponding variable focus lenses 3, 3 (No in S20), the main control portion 11 calculates a correction value using the view distance stored in the temporary memory and the control result in the manual control mode, and uses this correction value to update the focal-length-specifying-information (table data) stored in the storage portion 14 (S22).

Also in the embodiment 2, the control result in the manual control mode (control result of the focal length of the variable focus lens) stored in the storage portion 14 uses the control result when the user does not operate the dial portion 13a until T seconds have elapsed on the timer after the user operates the dial portion 13a, but is not limited to this. For example, when the user operates the dial portion 13a in the manual control mode to adjust the focal length of the variable focus lens 3, the user often operates the dial portion 13a to lengthen or shorten the focal length, and then, after the focal length when in focus has passed through, the user conversely operates the dial portion 13a to shorten or lengthen the focal length, thereby the user finally adjusts to the focal length (suitable focal length) when in focus. In consideration of this, the control result when the user operates the dial portion 13a to lengthen or shorten the focal length and then, conversely to shorten or lengthen the focal length may be used. This allows operations unrelated to the focusing operation, such as erroneous operation of the dial portion 13a, to be eliminated, and the focal length adjusted by the instruction operation for focusing to the dial portion 13a can be used with high accuracy as the control result in the manual control mode stored in the storage portion 14. A method of determining the suitable focal length taking such adjustment into consideration may be applied to the update process in the setting mode.

In the present embodiment 2, the update process is performed so that an arbitrary view object around the user is used as the setting-use view object to store the focal-length-specifying-information in the storage portion 14, but is not limited to this. For example, the update process may be performed using a setting-use view object located at a predetermined distance in a sales location of the spectacles 1 according to the embodiment 2 or in a medical institution such as an ophthalmology clinic. In this case, a distance to the setting-use view object that is known in advance may be input to the control apparatus 10 of the spectacles 1, instead of the detection result of the distance detection portion 21 of the spectacles 1, and the update process may be performed using this input value.

In addition, in the present embodiment 2, the new focal-length-specifying-information used by the main control portion 11 in the update process is generated in the main control portion 11 of the control apparatus 10 mounted on the spectacles 1, but it may also be generated in an external apparatus. That is, the new focal-length-specifying-information generated in the external apparatus may be input to the control apparatus 10 mounted on the spectacles 1, and the update process may be executed so that the focal-length-specifying-information in the storage portion 14 is updated with the input new focal-length-specifying-information.

It is noted that process steps and configuration elements in the ophthalmic lens apparatus such as spectacles 1 described in the present specification can be implemented with various means. For example, these process steps and configuration elements may be implemented with hardware, firmware, software, or a combination thereof.

With respect to hardware implementation, means such as processing sections or the like used for establishing the foregoing steps and configuration elements may be implemented in one or more of an application-specific IC (ASIC), a digital signal processor (DSP), a digital signal processing device (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing sections or the like for using to establish the foregoing configuration elements may be implemented with a program (for example, a code such as a procedure, a function, a module, an instruction, etc.) for performing a function described in the present specification. In general, any computer/processor readable medium of clearly materializing the code of firmware and/or software may be used for implementation of means such as processing sections and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage section, or the like. The code may be executed by one or more of computers and processors, and a certain aspect of functionalities described in the present specification may be executed by a computer or processor.

The foregoing medium may be a non-temporary recording medium. The foregoing code of the program may be readable and executable by a computer, processor, or other device or apparatus machine, and its format is not limited to a specific format. For example, the foregoing code of the program may be any of source code, object code, and binary code, or may be a mixture of two or more of these codes.

### REFERENCE SIGNS LIST

1: spectacles
2: spectacle frame
3: variable focus lens
4: bridge portion
4a: slide portion
6: lens-holding portion
7: nose-pad portion
8: endpiece portion
8a: mounting portion
8b: hinge portion
9: temple portion
10: control apparatus
11: main control portion
12: voltage change portion
13: operation portion
13a: dial portion
13b: button portion
13c: Lever part
14: storage portion
20: battery
21: distance detection portion
301: first electrode
301a, 301b: insulating layer
302A to 302H: second electrode
303, 304: window member
311: insulating liquid
312: conductive liquid
D: inter-lens distance
I: interface
Ia: end
O: axis
PD: pupillary distance

## Claims

1. (First basic claim 1) A lens control apparatus for controlling a focal length of a variable focus lens for eyes, comprising:
a storage portion for storing focal-length-specifying-information for specifying a focal length of the variable focus lens according to a distance to a view object;
a control portion for controlling a focal length of the variable focus lens based on a detection result of a distance detection portion that detects the distance to the view object and the focal-length-specifying-information in the storage portion; and
a setting process portion for executing a setting process in which a distance to each of setting-use view objects located at multiple different distances when the user of the variable focus lens views the respective setting-use view objects, and the focal-length-specifying-information generated based on each focal length of the variable focus lens at which the user focuses on each of the setting-use view objects, are stored in the storage portion.

2. (First basic claim 2) The lens control apparatus according to claim 1,
wherein the setting process portion uses the detection result of the distance detection portion as distance information to each of the setting-use view objects, and executes the setting process.

3. (Second basic claim 1) A lens control apparatus for controlling a focal length of a variable focus lens for eyes, comprising:
a storage portion for storing focal-length-specifying-information for specifying a focal length of the variable focus lens according to a distance to a view object;
a control portion for controlling a focal length of the variable focus lens based on a detection result of a distance detection portion that detects the distance to the view object and the focal-length-specifying-information in the storage portion; and
an update process portion for executing an update process in which a distance to a setting-use view object when the user of the variable focus lens views the setting-use view object, and a focal length of the variable focus lens at which the user focuses on the setting-use view object are acquired, and the focal-length-specifying-information stored in the storage portion is updated by new focal-length-specifying-information in which not only the focal length corresponding to the view distance but also focal lengths corresponding to other distances are corrected by a correction value that reduces a difference between the acquired focal length and the focal length corresponding to the view distance in the focal-length-specifying-information stored in the storage portion.

4. (Second basic claim 2) The lens control apparatus according to claim 3,
wherein the new focal-length-specifying-information is obtained by uniformly correcting the focal length corresponding to the view distance and the focal length corresponding to the above other distance by the same correction value.

5. (Second basic claim 3) The lens control apparatus according to claim 3 or 4,
wherein the update process portion uses the detection result of the distance detection portion as distance information to the setting-use view object, and executes the update process.

6. (Second basic claim 4) The lens control apparatus according to any one of claims 3 to 5,
wherein the above other distance is any distance included in the focal-length-specifying-information stored in the storage portion, other than the view distance.

7. (Second basic claim 5) The lens control apparatus according to any one of claims 3 to 6,
wherein the update process portion acquires a distance to the setting-use view object located within a distance range in which a rate of change of focal length with respect to distance is equal to or less than a predetermined threshold, and executes the update process.

8. (First basic claim 3, second basic claim 6) An ophthalmic lens apparatus having
a variable focus lens for eyes, and a lens control device for controlling the variable focus lens, further comprising a distance detection portion for detecting a distance to the view obj ect,
wherein the lens control apparatus according to any one of claims 1 to 7 is used as the control device.

9. (First basic claim 4) The ophthalmic lens apparatus according to claim 8, further comprising a focal-length determination portion for determining each focal length of the variable focus lens at which the user of the variable focus lens views and focuses on each of the setting-use view objects,
wherein the lens control device is the lens control apparatus according to claim 1 or 2, and
the setting process portion uses a result of determination by the focal-length determination portion, and executes the setting process.

10. (Second basic claim 7) The ophthalmic lens apparatus according to claim 8, further comprising a focal-length determination portion for determining a focal length of the variable focus lens at which the user of the variable focus lens views and focuses on the setting-use view objects,
wherein the lens control device is the lens control apparatus according to any one of claims 3 to 7, and
the update process portion uses a result of determination by the focal-length determination portion, and executes the update process.

11. (First basic claim 5, second basic claim 8) The ophthalmic lens apparatus according to claim 9 or 10, further comprising an operation portion for receiving a user operation for changing a focal length of the variable focus lens,
wherein the focal-length determination portion determines the focal length based on an operation result of the operation portion.

12. (First basic claim 6, second basic claim 9) Spectacles comprising the ophthalmic lens apparatus according to any one of claims 8 to 11,
wherein the variable focus lens is held in a spectacle frame.

13. (First basic claim 7) A control method for controlling a focal length of a variable focus lens for eyes, comprising:
a control step for controlling a focal length of the variable focus lens based on a detection result of a distance detection portion that detects a distance to a view object and focal-length-specifying-information stored in a storage portion that stores the focal-length-specifying-information for specifying a focal length of the variable focus lens according to the distance to the view object; and
a setting process step for executing a setting process in which a distance to each of setting-use view objects located at multiple different distances when the user of the variable focus lens views the respective setting-use view objects, and the focal-length-specifying-information generated based on each focal length of the variable focus lens at which the user focuses on each of the setting-use view objects, are stored in the storage portion.

14. (Second basic claim 10) A control method for controlling a focal length of a variable focus lens for eyes, comprising:
a control step for controlling a focal length of the variable focus lens based on a detection result of a distance detection portion that detects a distance to a view object and focal-length-specifying-information stored in a storage portion that stores the focal-length-specifying-information for specifying a focal length of the variable focus lens according to the distance to the view object; and
an update process step for executing an update process in which a distance to a setting-use view object when the user of the variable focus lens views the setting-use view object, and a focal length of the variable focus lens at which the user focuses on the setting-use view object are acquired, and the focal-length-specifying-information stored in the storage portion is updated by new focal-length-specifying-information in which not only the focal length corresponding to the view distance but also focal lengths corresponding to other distances are corrected by a correction value that reduces a difference between the acquired focal length and the focal length corresponding to the view distance in the focal-length-specifying-information stored in the storage portion.
